# EUROPÄISCHE PATENTSCHRIFT

(11) **EP 3 838 213 B1**
(45) Veröffentlichungstag und Bekanntmachung des Hinweises auf die Patenterteilung: **14.02.2024**
(21) Anmeldenummer: 20211057.3
(22) Anmeldetag: 01.12.2020
(51) Int. Cl.: A61C 7/28

(54) **SELBSTLIGIERENDES BRACKET FÜR DIE ORTHODONTIE**
SELF-LIGATING BRACKET FOR ORTHODONTICS
SUPPORT AUTOLIGATURANT POUR L'ORTHODONTIE

(30) Priorität: 16.12.2019 DE 102019134575
(43) Veröffentlichungstag der Anmeldung: 23.06.2021
(73) Patentinhaber: Bernhard Förster GmbH, 75172 Pforzheim (DE)
(72) Erfinder: Wagner, Carsten, 75015 Bretten (DE)
(74) Vertreter: Twelmeier Mommer & Partner

(56) Entgegenhaltungen:
- CN-A- 103 340 691
- CN-U- 205 083 675
- KR-A- 20180 127 123
- US-A1- 2007 248 928
- US-A1- 2017 014 208

## Beschreibung

Die Erfindung geht aus von einem selbstligierenden Bracket für die Orthodontie mit den im Oberbegriff im des Anspruchs 1 angegebenen Merkmalen. Ein Bracket mit den im Oberbegriff im des Anspruchs 1 angegebenen Merkmalen ist aus CN 205 083 675 U bekannt. Ähnliche Brackets sind in US 2017/014 208 A1 und CN 103 340 691 A1 offenbart.

Bei diesen Brackets ist aus einem labialen Klammerschenkel eine gegen die okklusale Wand gerichtete Zunge ausgeschnitten und in labialer Richtung so abgebogen, dass sie einen spitzen Winkel mit dem lingualen Klammerschenkel einschließt. Ferner ist die den Schlitz begrenzende labiale Oberfläche im Bereich der gingivalen Wand und im Bereich der Nut entfernt oder unterbrochen, um durch Einführen eines Werkzeugs aus labialer Richtung in die Nut ein Niederdrücken der Zunge zu ermöglichen. Die gegen die okklusale Wand gerichtete Zunge verhindert, dass die Klammer in ihrer Offenstellung versehentlich aus dem Schlitz herausrutscht und verloren geht. Brackets, bei denen der in dem Schlitz verschiebbare Klammerschenkel derart eingerichtet ist, dass in Offenstellung der Klammer ein Herausrutschen aus dem

Schlitz verhindert wird, haben sich vielfach in der Praxis bewährt. Die Herstellung einer Klammer mit einer solchen abgebogenen Zunge ist schwierig und kann mit relativ großen Fertigungstoleranzen behaftet sein, weil sich die gut federnden Materialien, welche zur Erreichung einer hohen Elastizität der Klammer gut geeignet sind, üblicherweise nur schlecht plastisch verformen lassen.

Aus der US 2010/0062387 A1 ist ein nicht gattungsgemäßes Bracket bekannt, welches ein Hubelement zwischen der labialen Oberfläche des Brackets und dem labialen Schenkel der Klammer aufweist. Das Hubelement kann gedreht werden, um den labialen Klammerschenkel in Schließstellung der Klammer nach labial anzuheben und dadurch die Kräfte begrenzen, die die Klammer auf den Drahtbogen ausübt. Hierzu kann das Hubelement mit einem Gewinde oder einem Kurvenscheibenmechanismus ausgestattet sein. Das Hubelement hat einen zylindrischen Kopf, welcher einen Schlitz aufweist und in einem Langloch des labialen Klammerschenkels sitzt, um eine Einstellung des Hubelements von außen zu ermöglichen. Gleichzeitig begrenzt die Länge des Langlochs im labialen Klammerschenkel den Verschiebeweg der Klammer zwischen ihrer Schließstellung ihrer Offenstellung. In dem Langloch und dem Hubelement können sich sehr leicht Verschmutzungen und Speisereste festsetzen, die durch den Kauvorgang sogar noch verdichtet werden. Solche Speisereste lassen sich durch die üblichen Methoden des Zähneputzens praktisch nicht beseitigen. Ein Verschieben der Klammer in ihre Offenstellung kann dadurch blockiert werden.

Aus der US 2009/0325120 A1 ist ein nicht gattungsgemäßes, rein passives Bracket ohne Klammer bekannt, welches einen auf einer Schwalbenschwanzführung in Richtung gingival-okklusal verschiebbaren Schieber aufweist, der sich in seiner Schließstellung bis zur gingivalen Wand erstreckt und in seiner Offenstellung die Nut freigibt. Der Sockel hat einen integralen rampenförmigen Vorsprung, welcher mit Rastkonturen an dem Schieber zusammenwirkt und dessen Verschiebung in seiner Offenstellung in Richtung okklusal begrenzt. Der rampenförmige Vorsprung und/oder die Rastkonturen des Schiebers sind ausreichend nachgiebig, um eine Rastwirkung in Offenstellung und Schließstellung zu gewährleisten. Ein solches Bracket kann somit nicht aus unnachgiebigen Materialen, wie beispielsweise Keramik, hergestellt werden.

Der vorliegenden Erfindung liegt die Aufgabe zu Grunde, bei einem Bracket der eingangs genannten Art, die Herstellung der Klammer zu verbessern und zu vereinfachen.

Diese Aufgabe wird gelöst durch ein Bracket mit den im Anspruch 1 angegebenen Merkmalen. Vorteilhafte Weiterbildungen der Erfindung sind Gegenstand der Unteransprüche.

Das erfindungsgemäße selbstligierende Bracket für die Orthodontie hat einen Sockel, eine von dem Sockel ausgehende okklusale Wand, eine von dem Sockel ausgehende gingivale Wand und eine Nut, welche die okklusale Wand und die gingivale Wand voneinander trennt und sich durchgehend in Richtung von mesial nach distal erstreckt. Die der Nut abgewandte Seite des Brackets wird als Befestigungsseite bezeichnet, welche dazu vorbereitet, ist auf ein Zahn geklebt zu werden. Das erfindungsgemäße Bracket kann mit seiner Befestigungsseite auf einer lingualen oder einer vestibulären Oberfläche eines Zahnes aufgeklebt werden. Die Nut wird in der deutschen Fachsprache wie in der englischen Sprache auch als "slot" bezeichnet. Sie dient dazu, einen Drahtbogen (arch wire) aufzunehmen, welcher üblicherweise durch eine Folge von Brackets führt, die auf einer Reihe von nebeneinander liegenden Zähnen befestigt sind. Durch Ziehen und/oder Verdrehen kann in dem Draht eine Vorspannung erzeugt werden, welche von dem Drahtbogen auf die Brackets und von diesen auf einen oder mehrere Zähne übertragen wird, um deren Stellung zu ändern.

Das Bracket hat einen Schlitz, welcher sich in Richtung von gingival nach okklusal erstreckt und durch eine lingual gelegene Führungsfläche und durch eine labial gelegene Führungsfläche begrenzt ist. Das Bracket enthält ferner eine federnde Klammer, welche einen ersten Klammerschenkel und einen zweiten Klammerschenkel hat, welche durch einen gebogenen Abschnitt miteinander verbunden sind. Dieser gebogene Abschnitt wird im Folgenden als Klammerbiegung bezeichnet und kann okklusal oder gingival angeordnet sein, je nach dem, in welcher Orientierung das Bracket auf die Oberfläche des Zahnes aufgeklebt wird. Bei einem Bracket, dessen Befestigungsseite zum Aufkleben auf eine vestibuläre Oberfläche eines Zahnes bestimmt ist, wird der erste Klammerschenkel auch als lingualer Schenkel und der zweite Klammerschenkel auch als labialer Schenkel bezeichnet. Der erste Klammerschenkel hat eine in Richtung gingival-okklusal verlaufende Längsrichtung und erstreckt sich in einer Ebene. Der erste Klammerschenkel steckt zwischen der lingual gelegenen Oberfläche und der labial gelegenen Oberfläche in dem Schlitz und ist darin in Richtung gingival-okklusal zwischen einer Schließstellung und einer Offenstellung der Klammer verschiebbar. Wenn die Klammer zum Öffnen von gingival nach okklusal verschoben wird, ist die Klammerbiegung okklusal angeordnet. Dann erstreckt sich der zweite Klammerschenkel in Schließstellung der Klammer bis in einen Ausschnitt in der gingivalen Wand. In der Offenstellung der Klammer ruht die Spitze des zweiten Klammerschenkels auf der okklusalen Wand, sodass ein Drahtbogen in die Nut eingesetzt oder aus der Nut entnommen werden kann. In der Schließstellung schließt der zweite Klammerschenkel die Nut und liegt an dem Drahtbogen federnd an, um diesen gegen den Grund der Nut zu drücken. Ein solches Bracket wird deshalb als "aktives Bracket" bezeichnet. Für den Fall, dass der Drahtbogen auf den zweiten Klammerschenkel eine Kraft ausübt, welche die Rückstellkraft der Klammer übersteigt, kann die Ausnehmung in der gingivalen Wand durch einen Anschlag begrenzt sein, an welchem der zweite Klammerschenkel anschlägt, wenn der Drahtbogen mit einer hinreichend großen Kraft auf den zweiten Klammerschenkel einwirkt. Der Anschlag begrenzt somit den Abstand des zweiten Klammerschenkels von dem Grund der Nut. Der Anschlag in der gingivalen Wand des Brackets begrenzt ferner die größtmögliche Abmessung des Drahtbogens in Richtung lingual-labial. Alternativ kann auch vorgesehen sein, dass die Klammer zum Öffnen von okklusal nach gingival verschoben wird. In einem solchen Fall ist die Klammerbiegung gingival angeordnet und der zweite Klammerschenkel erstreckt sich in Schließstellung bis in einen Ausschnitt der okklusalen Wand während seine Spitze in Offenstellung auf der gingivalen Wand ruht.

Bei okklusal angeordneter Klammerbiegung kann die Klammer in ihrer Schließstellung dadurch gehalten werden, dass der zweite Klammerschenkel beim Vorschieben in die Schließstellung gegen die okklusale Wand federt und nur durch elastisches Aufbiegen aus der Schließstellung in die Offenstellung überführt werden kann. Bei gingival angeordneter Klammerbiegung federt der zweite Klammerschenkel gegen die gingivale Wand.

Der erste Klammerschenkel des erfindungsgemäßen Brackets ist derart eingerichtet, dass im Zusammenwirken mit anderen Teilen des Brackets ein ungewollter Verlust der Klammer verhindert wird. Erfindungsgemäß ist vorgesehen, dass der erste Klammerschenkel wenigstens eine längliche Aussparung aufweist, in welche ein von der lingual oder labial gelegenen Oberfläche des Schlitzes ausgehender Vorsprung hineinragt. Die Aussparung im ersten Klammerschenkel erstreckt sich in Richtung gingival-okklusal und wird an ihrem der Klammerbiegung abgewandten Ende von einem Anschlag begrenzt, welcher in Offenstellung der Klammer an dem Vorsprung anschlägt und eine weitere Verschiebung der Klammer begrenzt. Die Klammer kann dadurch nicht über ihre Offenstellung hinaus in Richtung der Klammerbiegung nach okklusal bzw. gingival verschoben werden. Das Herausschieben des ersten Klammerschenkels aus dem Schlitz wird begrenzt, sodass die Klammer nicht aus dem Schlitz herausfallen kann.

Die dem Vorsprung gegenüber gelegene Oberfläche bildet innerhalb des Schlitzes einen Ausweichraum, in welchen hinein der erste Klammerschenkel mit dem Anschlag unter federelastischer Verformung ausweicht, wenn beim Einschieben der Klammer in den Schlitz der Anschlag über den Vorsprung gleitet. Die dem Vorsprung gegenübergelegene Oberfläche ist dabei derart ausgeformt, dass sich ein Ausweichraum, insbesondere in einem dem Vorsprung gegenüberliegenden Bereich, bildet. Der Ausweichraum kann beispielsweise in Form einer Ausnehmung, Aussparung, Vertiefung, Tasche oder Rille ausgebildet sein. Wenn der Vorsprung von der labial gelegenen Oberfläche des Schlitzes ausgeht ragt er in Richtung lingual in die Aussparung des ersten Klammerschenkels hinein. Wenn der erste Klammerschenkel beim Einschieben den Vorsprung erreicht, wird der Klammerschenkel federelastisch in Richtung lingual verformt und weicht in den Ausreichraum aus, welcher in der lingual gelegenen Oberfläche des Schlitzes ausgeformt ist. Durch dieses Ausweichen gleitet der Anschlag über den Vorsprung, ohne dass sich der Vorsprung verformt. Der Vorsprung kann unnachgiebig sein. Beim Ausweichen wird der erste Klammerschenkel um eine Linie gebogen, die entlang seiner Erstreckungsebene verläuft.

Die Erfindung hat wesentliche Vorteile:
- Der erste Klammerschenkel verhindert zusammen mit dem innerhalb des Schlitzes vorhandenen Vorsprung zuverlässig einen ungewollten Verlust der Klammer, wenn sie aus der Schließstellung in die Offenstellung überführt wird. Ein ungewolltes Herausrutschen des ersten Klammerschenkels aus dem Schlitz wird verhindert.
- Die Herstellung der Klammer ist wesentlich vereinfacht. Zur Verhinderung des Herausrutschens ist keine plastische Verformung der Klammer mehr erforderlich.
- Die längliche Aussparung im ersten Klammerschenkel kann sehr einfach durch Ausstanzen, beispielsweise eines Langlochs oder eines Randbereichs des Schenkels, hergestellt werden.
- Die Klammer kann dadurch wesentlich präziser und mit geringeren Fertigungstoleranzen hergestellt werden.
- Das Bracket - abgesehen von der federnden Klammer - kann aus einem unnachgiebigen Material, welches sich praktisch nicht federelastisch verformen lässt, wie beispielsweise Keramik, hergestellt werden. Beim Einschieben des ersten Klammerschenkels in den Schlitz wird lediglich die Klammer elastisch verformt.
- Der Vorsprung und der diesem gegenüberliegende Ausweichraum lassen sich innerhalb dieses Schlitzes einfach ausbilden, insbesondere wenn das Bracket in einem Stück geformt ist, insbesondere durch Metal Injection Molding (MIM) oder durch Sintern aus Keramik.

In weiterer Ausgestaltung der Erfindung kann die dem Vorsprung gegenüber gelegene Oberfläche des Schlitzes wenigstens eine ebene Führungsfläche für den ersten Klammerschenkel enthalten. Die den Schlitz begrenzende Oberfläche, von welcher der Vorsprung ausgeht, enthält erfindungsgemäß eine ebene Führungsfläche für den ersten Klammerschenkel, und kann insbesondere als ebene Führungsfläche ausgebildet sein. Die Oberfläche, von welcher der Vorsprung ausgeht, kann vollständig eben sein. Die Führungsflächen in der lingual gelegenen Oberfläche und in der labial gelegenen Oberfläche des Schlitzes können parallel zueinander verlaufen. Dies kann eine gute Führung des ersten Klammerschenkels gewährleisten.

Die zur Klammerbiegung weisende Seite des Vorsprungs innerhalb des Schlitzes verläuft schräg zu der Führungsfläche, von welcher der Vorsprung ausgeht, insbesondere in einem Winkel von 15° bis 25°. Dies erleichtert das Gleiten des Anschlages über den Vorsprung beim Einschieben des ersten Klammerschenkels in den Schlitz und dessen Ausweichen unter federelastischer Verformung. Die der Klammerbiegung abgewandte Seite des Vorsprungs kann stärker als seine zur Klammerbiegung weisende Seite zu der Führungsfläche geneigt sein. Hierdurch kommt es zu einem Einrasten des ersten Klammerschenkels und einer guten Sicherung gegen ungewollten Verlust.

In weiterer Ausgestaltung kann das Bracket an seiner Befestigungsseite eine verbreiterte Basis aufweisen, deren in Richtung von mesial nach distal und/oder von gingival nach okklusal gemessene Breite größer als die entsprechende Breite des Sockels ist. Eine derart verbreiterte Basis wird auch als "Pad" bezeichnet und kann die zum Aufkleben des Brackets zur Verfügung stehende Fläche an der Befestigungsseite vergrößern und dadurch die Haftung des Brackets auf dem Zahn verbessern. Die Befestigungsseite kann auch mit Strukturen, beispielsweise hinterschnittenen Vorsprüngen in wechselnder Orientierung, versehen sein, welche beim Verkleben des Brackets mit einem Zahn zu einer deutlich besseren Haftung des Brackets auf dem Zahn führen. Bei Brackets aus Metall kann die Basis auch gesondert hergestellt und erst nachträglich durch Schweißen mit dem Sockel des Brackets verbunden werden. Die okklusale Wand kann wenigstens einen okklusalen Ligaturenflügel aufweisen. Die gingivale Wand kann wenigstens einen gingivalen Ligaturenflügel aufweisen. An Ligaturenflügeln können in einer an sich bekannten Weise Ligaturendrähte angebracht werden.

Der Schlitz, in welchem der erste Klammerstenkel steckt kann quer zur Nut, insbesondere senkrecht zur Nut verlaufen. Insbesondere kann sich der Schlitz durchgehend durch den Sockel hindurch erstrecken. Alternativ kann der Schlitz auf der der Klammerbiegung abgewandten Seite des Brackets geschlossen sein, wobei es sich hierbei insbesondere um die gingivale Seite des Brackets handeln kann. Der Schlitz kann im Sockel zwischen der Nut und der Befestigungsseite des Brackets verlaufen. Der Grund der Nut kann insbesondere unterbrechungsfrei durchgehend von mesial nach distal verlaufen. Dadurch besteht kein Durchgang zwischen dem Schlitz und der Nut. Dies kann die Herstellung des Brackets, insbesondere eines einstückigen Brackets, vereinfachen. Das Bracket hat im Inneren weniger Freiräume, welche sich durch Ablagerungen zu setzen können.

Die den Schlitz begrenzende Oberfläche, welche auf der der Nut abgewandten Seite des ersten Klammerschenkels gelegen ist, kann in jeder Stellung der Klammer über das freie Ende des ersten Klammerschenkels vorstehen. Unter dem "freien Ende" wird das der Klammerbiegung abgewandte Ende des Klammerschenkels verstanden. Am freien Ende und/oder vor dem freien Ende des ersten Klammerschenkels kann eine Positionierhilfe für ein Werkzeug vorgesehen sein, mit welchem die Klammer durch Druck gegen das freie Ende ihres ersten Klammerschenkels von der Schließstellung in die Offenstellung verschoben werden kann. Diese Positionierhilfe schwächt die Klammer und deren Rückstellkraft nicht. Ferner kann der erste Klammerschenkel bei dem auf sein freies Ende ausgeübten Druck nicht ausweichen, weil er in dem Schlitz, in dem er steckt, geradlinig geführt wird. Als Positionierhilfe kann in dem Sockel eine sich von gingival nach okklusal erstreckende Rille vorgesehen sein, welche an einem Anschlag endet, welcher von dem Ende des ersten Klammerschenkels überdeckt wird, wenn sich die Klammer in ihrer Schließstellung befindet. Alternativ oder zusätzlich kann aber auch vorgesehen sein, dass der zweite Klammerschenkel ein Loch aufweist, in welches mit einem stiftförmigen Werkzeug eingegriffen werden kann, um mit ihm die Klammer aus ihrer Schließstellung in ihre Offenstellung zu verschieben.

Bei einer ersten und zweiten Variante des erfindungsgemäßen Brackets ist vorgesehen, dass der erste Klammerschenkel eine zentrale Aussparung aufweist. Diese kann insbesondere als Langloch ausgebildet sein, welches sich in Längsrichtung des ersten Klammerschenkels erstreckt. Das der Klammerbiegung abgewandte Ende des Langlochs kann den Anschlag für den vom Sockel ausgehenden Vorsprung bilden. Ein Langloch im ersten Klammerschenkel lässt sich sehr einfach herstellen. Erfindungsgemäß ist der Ausweichraum durch eine Rille in der dem Vorsprung gegenüber gelegenen Oberfläche des Schlitzes gebildet.

Die Rille erstreckt sich von gingival nach okklusal, insbesondere über die gesamte Länge des Schlitzes. Die Rille kann zwischen zwei ebenen Führungsflächen für den ersten Klammerschenkel angeordnet sein. Die dem Vorsprung gegenüber gelegene Oberfläche des Schlitzes enthält somit zwei Führungsflächen, die sich entlang des mesialen bzw. distalen Randes des ersten Klammerschenkels erstrecken. Hierdurch kann eine sehr gute Führung des ersten Klammerschenkels in dem Schlitz sichergestellt werden. Ist ein solches Bracket zur Befestigung auf einer vestibulären Oberfläche eines Zahnes bestimmt, kann insbesondere die lingual gelegene Oberfläche des Schlitzes die Rille und die beiden Führungsflächen enthalten, die sich mesial und distal neben der Rille entlang der Ränder des ersten Klammerschenkels erstrecken.

Bei der zweiten Variante des erfindungsgemäßen Brackets kann der erste Klammerschenkel an seinem mesialen Rand und an seinem distalen Rand jeweils eine Aussparung aufweisen. Jede der Aussparungen wird an ihrem der Klammerbiegung abgewandten Ende von einem Anschlag begrenzt. In jede der Aussparungen ragt ein von der lingual oder der labial gelegenen Oberfläche des Schlitzes ausgehender Vorsprung hinein. Jedem Vorsprung gegenüberliegend ist ein Ausweichraum in dem Schlitz ausgebildet. Jeder Ausweichraum kann jeweils durch eine Rille in der dem Vorsprung gegenüber gelegenen Oberfläche des Schlitzes gebildet werden. Die Rillen können sich von gingival nach okklusal erstrecken, insbesondere über die gesamte Länge des Schlitzes. Die ebene Führungsfläche in der dem Vorsprung gegenüber gelegenen Oberfläche des Schlitzes kann zwischen den beiden Rillen angeordnet sein.

Bei der ersten und zweiten Variante des erfindungsgemäßen Brackets ist die Linie, um welche der erste Klammerschenkel gebogen wird, wenn er beim Einschieben der Klammer in den Schlitz unter federelastischer Verformung dem Vorsprung ausweicht, eine Gerade, welche entlang der Längrichtung des ersten Klammerschenkels verläuft.

Bei einer dritten Variante eines nicht erfindungsgemäßen Brackets kann der Ausweichraum durch eine Tasche in der dem Vorsprung gegenüber gelegenen Oberfläche des Schlitzes gebildet werden. Die Tasche erstreckt sich von gingival nach okklusal, insbesondere über die gesamte Breite des ersten Klammerschenkels und/oder des Schlitzes. Hier ist die Linie, um welche der erste Klammerschenkel gebogen wird, wenn er beim Einschieben der Klammer in den Schlitz unter federelastischer Verformung dem Vorsprung ausweicht, eine Gerade, welche quer zur Längsrichtung des ersten Klammerschenkels verläuft.

In weiterer Ausgestaltung des Brackets kann die Nut an ihrem distalen Ende und an ihrem mesialen Ende jeweils Schrägflächen und/oder Rundungen aufweisen. In der Nut können auf der der Klammerbiegung abgewandten, insbesondere der gingivalen Wand, jeweils zwei Rippen vorgesehen sein, welche sich in Richtung lingual-labial erstrecken. Die Rippen können angefaste oder gerundete Kanten haben. Durch die Rippen kann bei der Herstellung des Brackets sehr einfach die in Richtung gingival-okklusal gemessene Breite des Schlitzes variiert werden. Die Klammer, insbesondere der erste Klammerschenkel, kann einen verrundeten Rand aufweisen.

Eine weitere vorteilhafte Weiterbildung der Erfindung sieht vor, dass das Bracket in einem Stück geformt ist.

Weitere Merkmale und Vorteile der Erfindung ergeben sich aus der nachfolgenden Beschreibung einiger Ausführungsbeispiele in Verbindung mit den beigefügten Figuren. Es zeigen:
- Figur 1: eine perspektivische Darstellung eines ersten Ausführungsbeispiels eines erfindungsgemäßen Brackets mit einer Klammer in Offenstellung,
- Figur 2: eine Ansicht des Brackets in Richtung des Pfeiles II der Figur 1,
- Figur 3: eine entlang der Schnittfläche III-III der Figur 2 geschnittene Ansicht des Brackets,
- Figur 4: eine entlang der Schnittfläche IV-IV der Figur 3 geschnittene Schrägansicht des Brackets,
- Figur 5: eine entlang der Schnittfläche V-V der Figur 3 geschnittene Schrägansicht des Brackets,
- Figur 6: das Bracket der Figur 1 in einer dieser entsprechenden Ansicht, wobei sich die Klammer in Schließstellung befindet,
- Figur 7: das Bracket gemäß Figur 6 in einer Ansicht entsprechend Figur 3,
- Figur 8: das Bracket der Figur 3 in einer dieser entsprechenden Ansicht, wobei die Klammer noch nicht eingeschoben ist,
- Figur 9: das Bracket gemäß Figur 8 in einer Ansicht entsprechend Figur 2,
- Figur 10: das Bracket gemäß Figur 8 in einer Ansicht entsprechend Figur 4,
- Figur 11: das Bracket der Figur 3 in einer dieser entsprechenden Ansicht, wobei die Klammer teilweise eingeschoben ist,
- Figur 12: das Bracket gemäß Figur 11 in einer Ansicht entsprechend Figur 2,
- Figur 13: das Bracket gemäß Figur 11 in einer Ansicht entsprechend Figur 4,
- Figur 14: eine entlang der Schnittfläche XIV-XIV der Figur 11 geschnittene Ansicht des Brackets,
- Figur 15: eine perspektivische Darstellung eines zweiten Ausführungsbeispiels des erfindungsgemäßen Brackets mit einer Klammer in Offenstellung,
- Figur 16: eine Ansicht des Brackets in Richtung des Pfeiles XVI der Figur 15,
- Figur 17: eine entlang der Schnittfläche XVII-XVII der Figur 16 geschnittene Ansicht des Brackets,
- Figur 18: eine entlang der Schnittfläche XVIII-XVIII der Figur 17 geschnittene Schrägansicht des Brackets,
- Figur 19: eine entlang der Schnittfläche XIX-XIX der Figur 17 geschnittene Schrägansicht des Brackets,
- Figur 20: das Bracket der Figur 15 in einer dieser entsprechenden Ansicht, wobei sich die Klammer in Schließstellung befindet,
- Figur 21: das Bracket gemäß Figur 20 in einer Ansicht entsprechend Figur 17,
- Figur 22: das Bracket der Figur 17 in einer dieser entsprechenden Ansicht, wobei die Klammer noch nicht eingeschoben ist,
- Figur 23: das Bracket gemäß Figur 22 in einer Ansicht entsprechend Figur 16,
- Figur 24: das Bracket gemäß Figur 22 in einer Ansicht entsprechend Figur 18,
- Figur 25: das Bracket der Figur 17 in einer dieser entsprechenden Ansicht, wobei die Klammer teilweise eingeschoben ist,
- Figur 26: das Bracket gemäß Figur 25 in einer Ansicht entsprechend Figur 16,
- Figur 27: das Bracket gemäß Figur 25 in einer Ansicht entsprechend Figur 18,
- Figur 28: eine entlang der Schnittfläche XXVIII-XXVIII der Figur 25 geschnittene Ansicht des Brackets.
- Figur 29: eine perspektivische Darstellung eines dritten Ausführungsbeispiels des erfindungsgemäßen Brackets mit einer Klammer in Offenstellung,
- Figur 30: eine Ansicht des Brackets in Richtung des Pfeiles XXX der Figur 29,
- Figur 31: eine entlang der Schnittfläche XXXI-XXXI der Figur 30 geschnittene Ansicht des Brackets
- Figur 32: eine entlang der Schnittfläche XXXII-XXXII der Figur 31 geschnittene Schrägansicht des Brackets,
- Figur 33: eine entlang der Schnittfläche XXXIII-XXXIII der Figur 31 geschnittene Schrägansicht des Brackets,
- Figur 34: das Bracket der Figur 29 in einer dieser entsprechenden Ansicht, wobei sich die Klammer in Schließstellung befindet,
- Figur 35: das Brackets gemäß Figur 34 in einer Ansicht entsprechend Figur 31,
- Figur 36: das Bracket der Figur 31 in einer dieser entsprechenden Ansicht, wobei die Klammer noch nicht eingeschoben ist,
- Figur 37: das Bracket gemäß Figur 36 in einer Ansicht entsprechend Figur 30,
- Figur 38: das Bracket gemäß Figur 36 in einer Ansicht entsprechend Figur 32,
- Figur 39: das Bracket der Figur 31 in einer dieser entsprechenden Ansicht, wobei die Klammer teilweise eingeschoben ist,
- Figur 40: das Bracket gemäß Figur 39 in einer Ansicht entsprechend Figur 30,
- Figur 41: das Bracket gemäß Figur 39 in eine Ansicht entsprechend Figur 32,
- Figur 42: eine entlang der Schnittfläche XLII-XLII der Figur 39 geschnittene Ansicht des Brackets.

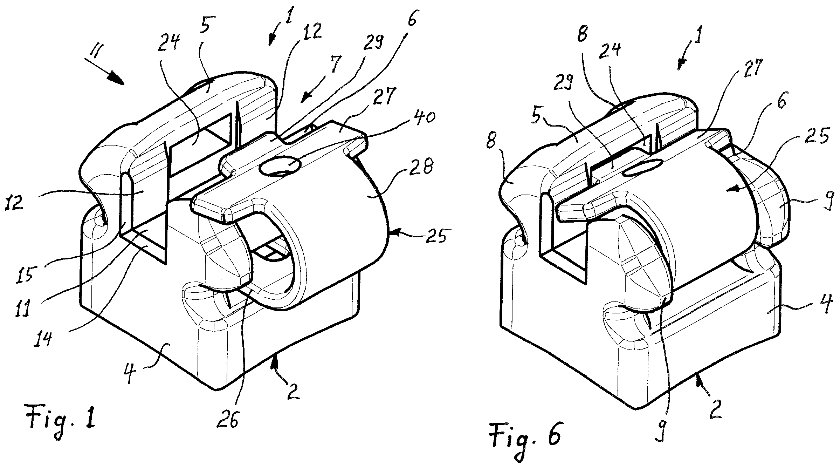

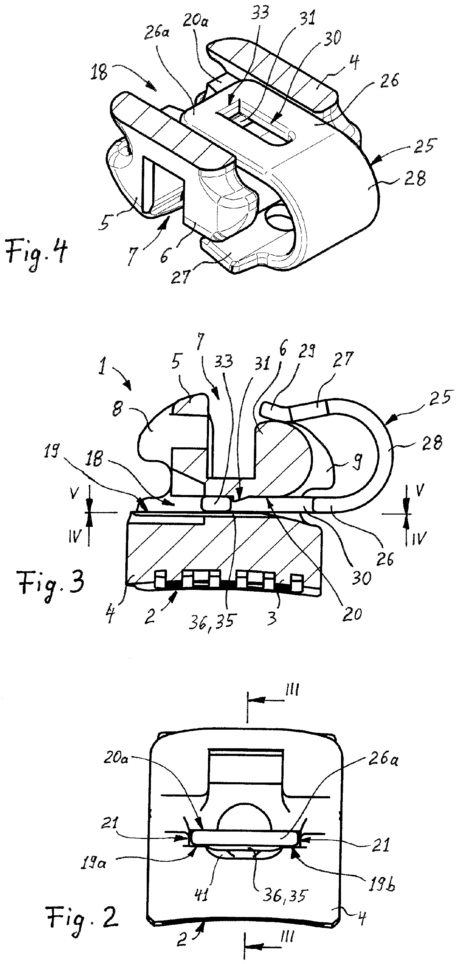

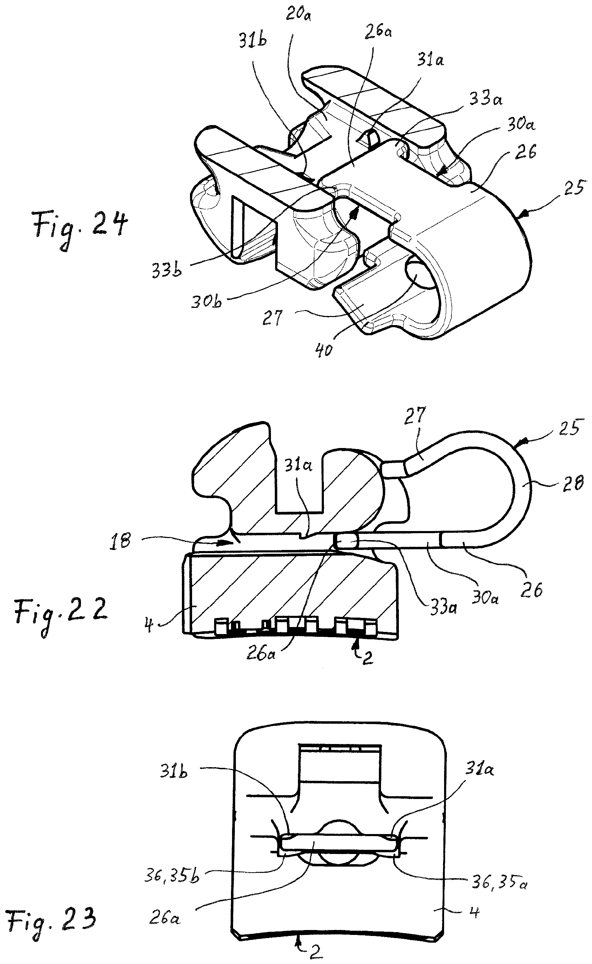

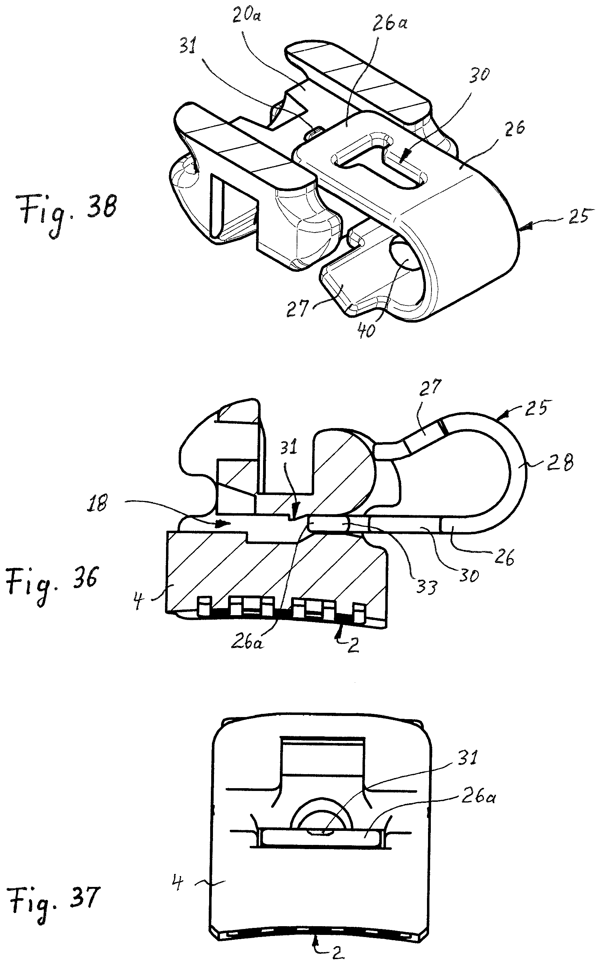

In den Figuren 1 bis 42 sind drei Ausführungsbeispiele eines erfindungsgemäßen Brackets 1 dargestellt. Das erfindungsgemäße Bracket 1 hat eine gewölbte Befestigungsseite 2, deren Wölbung der vestibulären Seite eines Zahnes (nicht dargestellt) angenähert ist. An der Befestigungsseite 2 sind in Reihen angeordnete Vorsprünge 3 angeordnet. Auf der Befestigungsseite 2 kann ein Klebstoff aufgetragen werden, um das Bracket 1 auf die vestibuläre Seite eines Zahnes zu kleben. Die Befestigungsseite 2 bildet somit die linguale Seite des Brackets 1. Bei einem Bracket zum Aufkleben auf die linguale Seite eines Zahnes, sind die Angaben "lingual" und "labial" entsprechend zu tauschen. Das Bracket 1 hat einen Sockel 4, von welchem eine gingivale Wand 5 und eine okklusale Wand ausgehen. Die beiden Wände 5 und 6 verlaufen parallel zueinander und sind durch eine Nut 7 getrennt, welche gradlinig durchgehend von distal nach mesial verläuft und nach labial offen ist. An der gingivalen Wand 5 sind zwei in Richtung gingival ragende Ligaturenflügel 8 vorgesehen. An der okklusalen Wand 6 sind zwei in Richtung okklusal ragende Ligaturenflügel 9 vorgesehen. In Figur 3 ist somit die für das Bracket vorgesehene Orientierung auf einem Zahn hinsichtlich der Richtungen wie folgt: unten lingual, oben labial, rechts okklusal, links gingival und senkrecht zur Zeichenebene distal-mesial.

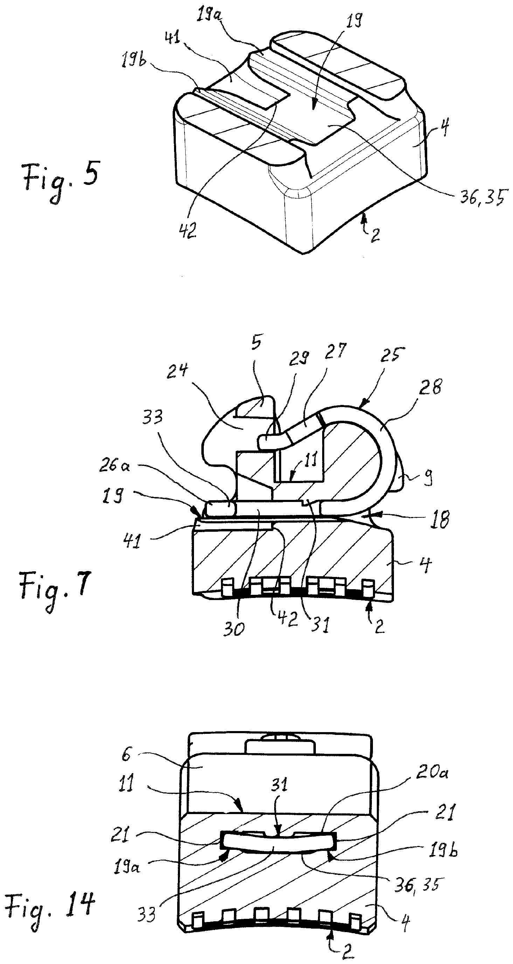

Die Nut 7 dient zur Aufnahme eines Drahtbogens (nicht dargestellt), welcher insbesondere einen rechteckigen Querschnitt hat und nicht Bestandteil des Brackets ist. Durch Vorspannen des Drahtbogens kann auf den Grund 11 der Nut 7 und auf die Wände 5 und 6 ein Drehmoment ausgeübt werden. Zu diesem Zweck ist der lichte Querschnitt der Nut 7 im Wesentlichen rechteckig ausgebildet. Er wird im vorliegenden Fall durch den Grund 11 der Nut 7 sowie durch Rippen 12 auf der gingivalen Wand 5 begrenzt, welche der Reibungsminderung des Drahtbogens in der Nut 7 dienen. Der Grund 11 erstreckt sich unterbrechungsfrei durchgehend von mesial nach distal, vgl. Figuren 14, 28 und 42. An den Enden der Nut 7 sind gerundete Schrägflächen 14 am Grund 11, gerundete Schrägflächen 15 an der gingivalen Wand 5 und gerundete Schrägflächen an der okklusalen Wand 6 vorgesehen, welche den Eingang der Nut 7 erweitern und ebenfalls der Reibungsminderung für den in der Nut 7 liegenden Drahtbogen dienen. Dies kann insbesondere bei großen Fehlstellungen der Zähne von Vorteil sein, welche einen besonders unregelmäßigen Verlauf des Drahtbogens erfordern.

Unterhalb des Grundes 11 der Nut 7 verläuft parallel zum Grund 11 ein Schlitz 18, welcher durch eine lingual gelegene Oberfläche 19 und eine labial gelegene Oberfläche 20 sowie durch zwei schmale Seitenwände 21 begrenzt ist. Die Seitenwände 21 verlaufen parallel zueinander und erstrecken sich zwischen der lingual gelegenen Oberfläche 19 und der labial gelegenen Oberfläche 20. Der Schlitz 18 erstreckt sich durchgehend durch den Sockel 4 hindurch und ist mit der Nut 7 nicht verbunden.

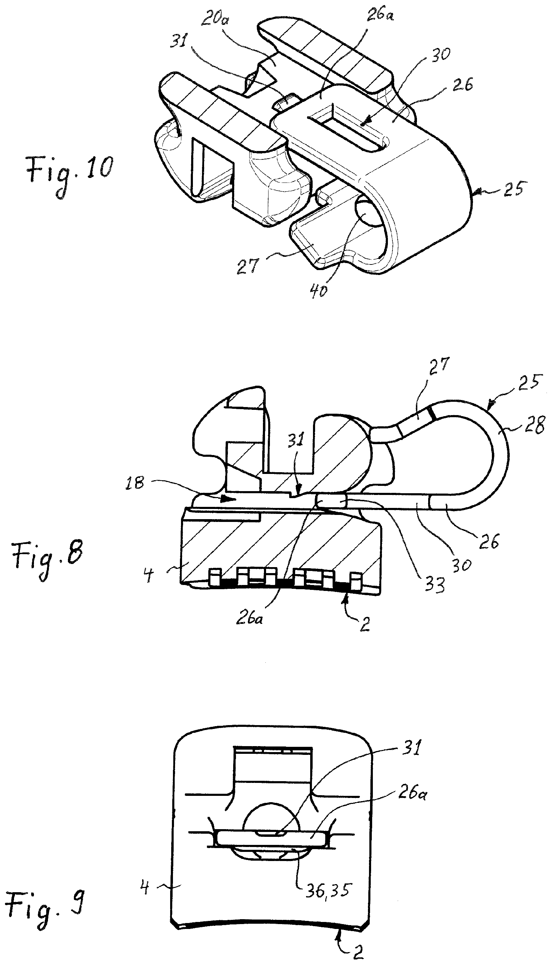

Zu dem Bracket 1 gehört eine Klammer 25 aus einem Federwerkstoff. Sie hat einen geradlinig verlaufenden ersten Klammerschenkel 26 und einen demgegenüber kürzeren zweiten Klammerschenkel 27, welcher annähernd geradlinig verläuft. Der erste Klammerschenkel 26 ist der linguale Schenkel und der zweite Klammerschenkel 27 ist der labiale Schenkel. Verbunden sind die beiden Klammerschenkel 26, 27 durch einen annährend kreisbogenförmig verlaufenden Abschnitt, welcher als Klammerbiegung 28 bezeichnet wird. Im dargestellten Fall bildet die Klammerbiegung 28 einen okklusal gelegenen Abschnitt der Klammer 25. Dieser ist genauso breit wie der erste Klammerschenkel 26, welcher mit wenig Spiel in den Schlitz 18 passt. Der zweite Klammerschenkel 27 verbreitert sich annähernd auf die Länge der Nut 7. Er verläuft nicht parallel, sondern in einem spitzen Winkel zum ersten Klammerschenkel 26, dem er sich, von der Klammerbiegung 28 herkommend, annähert. Der zweite Klammerschenkel 27 hat an seinem gingivalen Ende einen sich nach gingival erstreckenden Fortsatz 29, der in Richtung nach labial abgewinkelt ist. Der Fortsatz 29 ist schmaler als der zweite Klammerschenkel 27 und schmaler als der erste Klammerschenkel 26; er passt mit wenig Spiel in einen Ausschnitt 24, welcher in der gingivalen Wand 5 angeordnet ist. Die Klammer 25 wird mit dem Bracket 1 verbunden, indem der erste Klammerschenkel 26 aus okklusaler Richtung kommend in den Schlitz 18 eingeführt, vgl. Figuren 8, 22 und 36, und in gingivaler Richtung bis in die Schließstellung der Klammer 25 verschoben wird, vgl. Figuren 7, 21 und 35. Zum Öffnen wird die Klammer 25 in okklusaler Richtung bis in ihre Offenstellung zurückgeschoben, vgl. Figuren 3, 17 und 31. Bei einem Bracket zum Aufkleben auf einen Zahn in umgekehrter Richtung kann die Klammerbiegung 28 einen gingival gelegenen Abschnitt der Klammer 25 bilden und die Angaben "okklusal" und "gingival" sind entsprechend zu tauschen.

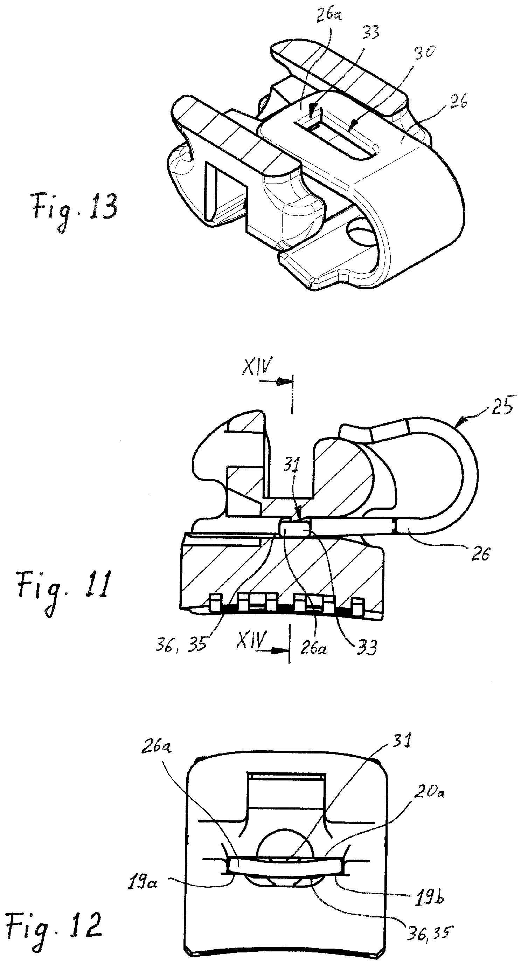

Bei dem ersten Ausführungsbeispiel des Brackets 1 gemäß der Figuren 1 bis 14 weist der erste Klammerschenkel 26 eine längliche Aussparung 30 auf. Die Aussparung 30 ist als Langloch ausgestaltet und zentral im ersten Klammerschenkel 26 angeordnet. In die Aussparung 30 ragt ein von der labial gelegenen Oberfläche 20 des Schlitzes 18 ausgehender Vorsprung 31 nach lingual hinein. Die labial gelegene Oberfläche 20 ist als ebene Führungsfläche 20a für den ersten Klammerschenkel 26 ausgebildet. Der Vorsprung 31 hat die Form einer Rastnase. Die zur Klammerbiegung (28) weisende (okklusale) Seite des Vorsprungs 31 verläuft in einem Winkel von etwa 20° schräg zu der Führungsfläche 20a. Die der Klammerbiegung (28) abgewandte (gingivale) Seite des Vorsprung 31 ist zu der Führungsfläche 20a stärker geneigt als die zur Klammerbiegung (28) weisende Seite. Der Vorsprung 31 ist einstückig am Sockel 4 ausgeformt. Die Aussparung 30 wird an ihrem der Klammerbiegung (28) abgewandten (gingivalen) Ende von einem Anschlag 33 begrenzt, welcher durch den von mesial nach distal verlaufenden Steg am freien (gingivalen) Ende 26a des ersten Klammerschenkels 26 gebildet wird. Die lingual gelegene Oberfläche 19 des Schlitzes 18 enthält zwei ebene Führungsflächen 19a und 19b für den ersten Klammerschenkel 26, zwischen denen eine Rille 35 angeordnet ist. Die Führungsflächen 19a, 19b verlaufen parallel zu der Führungsfläche 20a. Die Führungsflächen 19a, 19b und die Rille 35 erstrecken sich von gingival nach okklusal über die gesamte Länge des Schlitzes 18. Zu Beginn des Einführens der Klammer 5 in den Schlitz 18 sitzt der erste Klammerschenkel 26 mit seinem freien Ende 26a vor dem Vorsprung 31, vgl. Figuren 8 bis 10. Wenn der Anschlag 33 beim weiteren Einschieben des ersten Klammerschenkels 26 in den Schlitz 18 den Vorsprung 31 erreicht, wird der erste Klammerschenkel 26 mit dem Anschlag 33 federelastisch in Richtung lingual verformt, vgl. insbesondere Figuren 11 bis 14. Die Rille 35 in der lingual gelegenen Oberfläche 19 bildet einen Ausweichraum 36 in der dem Vorsprung 31 gegenüber gelegenen Oberfläche 19. Der erste Klammerschenkel 26 kann mit dem Anschlag 33 also in den Ausweichraum 36 ausweichen, wenn der Anschlag 33 beim Einschieben der Klammer 25 über den Vorsprung 31 gleitet. Der erste Klammerschenkel 26 wird dabei von den Führungsflächen 19a, 19b und dem Vorsprung 31 im Bereich des Anschlags 33 um eine gerade Linie gebogen, welche entlang der Längsrichtung des ersten Klammerschenkels 26 in Richtung gingival-okklusal verläuft, vgl. insbesondere Figuren 12 und 14. Wenn der Anschlag 33 über den Vorsprung 31 hinweggeschoben ist, federt der erste Klammerschenkel 26 in seine ebene Ausgangsform zurück, vgl. Figuren 2 bis 4. Wird der erste Klammerschenkel 26 weiter in Richtung Schließstellung verschoben, beeinträchtigt der Vorsprung 31 das Verschieben nicht, da der Vorsprung 31 in der Aussparung 30 Platz findet. Ist der erste Klammerschenkel 26 vollständig in den Schlitz 18 eingeschoben, befindet sich die Klammer 25 in ihrer Schließstellung, vgl. Figuren 6 und 7. Zum Verschieben der Klammer 25 von der Schließstellung in die Offenstellung hat der zweite Klammerschenkel 27 ein Loch 40, in welches mit einem stiftförmigen Werkzeug (nicht dargestellt) eingegriffen werden kann. Des Weiteren ist vor dem freien Ende 26a des ersten Klammerschenkels 26 eine Positionierhilfe 41 für ein Werkzeug (nicht dargestellt) vorgesehen, mit welchem die Klammer 25 durch Druck gegen das freie Ende 26a ihres ersten Klammerschenkels 26 von der Schließstellung in die Offenstellung verschoben werden kann. In jeder Stellung der Klammer 25, insbesondere in ihrer Schließstellung, vgl. Figur 7, steht die den Schlitz 18 begrenzende Oberfläche 19, welche auf der der Nut 7 abgewandten Seite des ersten Klammerschenkels 26 gelegen ist, über das freie Ende 26a des ersten Klammerschenkels 26 vor. Um die Klammer 25 aus ihrer Schließstellung, vgl. Figur 7, in ihre Offenstellung, vgl. Figur 3, zu überführen, nimmt man ein Werkzeug (nicht dargestellt) zur Hand, zum Beispiel einen Skaler, und setzt es am freien Ende 26a des ersten Klammerschenkels 26 an. Diese Stelle kann man ertasten, ohne sie sehen zu müssen, weil sich die lingual gelegene Oberfläche 19 soweit in gingivaler Richtung erstreckt, dass sie über das freie Ende 26a des ersten Klammerschenkels 26 vorsteht. Außerdem befindet sich in der lingual gelegenen Oberfläche 19, von deren gingivalem Ende ausgehend eine Rille 41, welche sich bis unter den ersten Klammerschenkel 26 erstreckt. Die Rille 41 verengt sich in Richtung von gingival nach okklusal und endet an einem Anschlag 42. Die Rille 41 dient als Positionierhilfe für das Werkzeug (nicht dargestellt), mit welchem die Rille 41 ertastet werden kann. Hat man die Rille 41 ertastet, schiebt man mit der Spitze des Werkzeugs die Klammer 25 in Richtung von gingival nach okklusal. Dabei wird die Spitze des Werkzeugs weiterhin durch die Rille 41 in der richtigen Richtung geführt. Die Verschiebebewegung endet, wenn der Anschlag 33 an dem Vorsprung 31 anschlägt, vgl. Figur 3. Die Klammer 25 befindet sich dann in ihrer Offenstellung. In dieser Offenstellung hat der zweite Klammerschenkel 27 eine Ruhelage auf der okklusalen Wand 6, in welcher er den Zugang zur Nut 7 aus labialer Richtung freigibt.

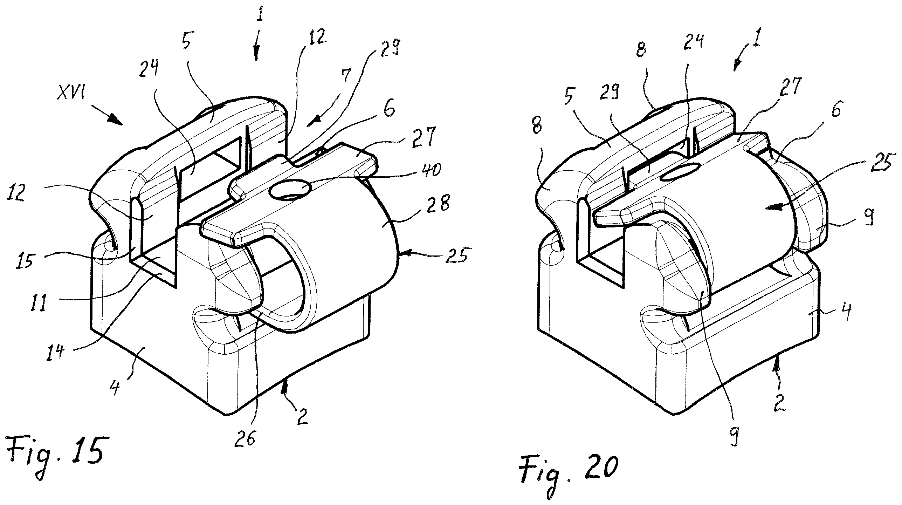

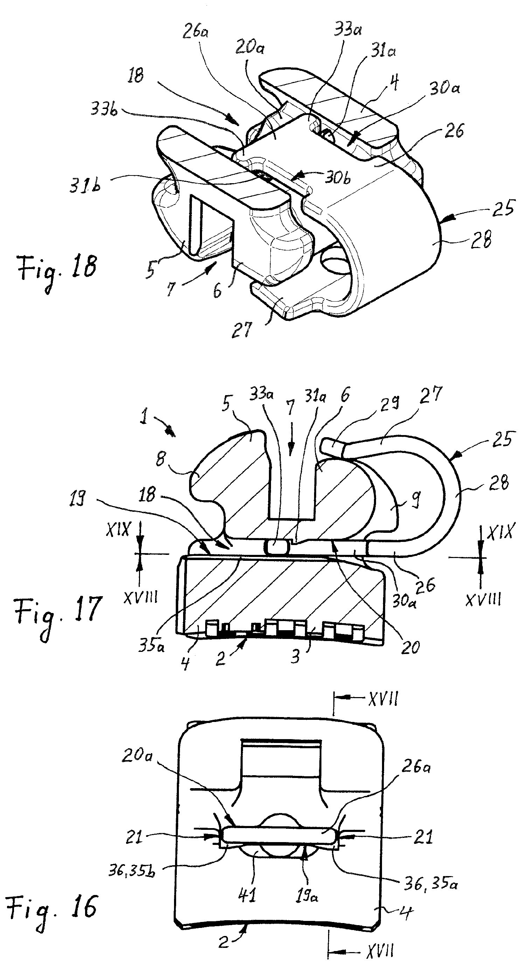

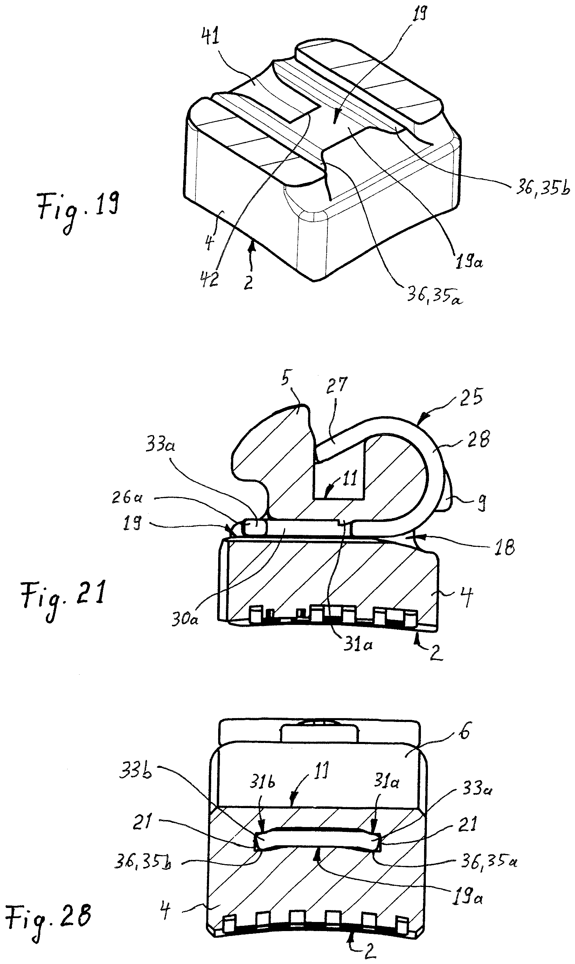

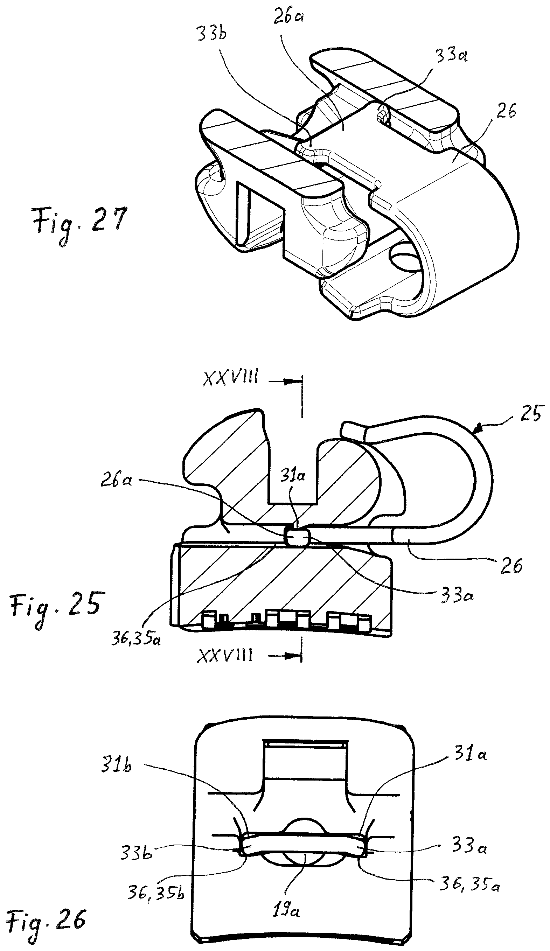

Bei dem in den Figuren 15 bis 28 dargestellten zweiten Ausführungsbeispiel des erfindungsgemäßen Brackets 1 weist der erste Klammerschenkel 26 an seinem mesialen Rand und an seinem distalen Rand jeweils eine Aussparung 30a, 30b auf. In die Aussparung 30a ragt ein von der labial gelegenen Oberfläche 20 ausgehender Vorsprung 31a hinein. In die Aussparung 30b ragt ein von der labial gelegenen Oberfläche 20 ausgehender Vorsprung 31b hinein. Dem Vorsprung 31a gegenüberliegend ist in dem Schlitz 18 ein Ausweichraum 36 zugeordnet, welcher in Form einer Rille 35a ausgebildet ist und sich von gingival nach okklusal über die gesamte Länge des Schlitzes 18 erstreckt. Dem Vorsprung 31b gegenüberliegend ist in dem Schlitz 18 ein Ausweichraum 36 zugeordnet, welcher in Form einer Rille 35b ausgebildet ist und sich ebenfalls von gingival nach okklusal über die gesamte Länge des Schlitzes 18 erstreckt. Die labial gelegene Oberfläche 20 des Schlitzes ist als ebene Führungsfläche 20a ausgebildet, von welcher die beiden Vorsprünge 31a, 31b ausgehen. Die lingual gelegene Oberfläche 19 des Schlitzes 18 enthält eine ebene Führungsfläche 19a für den ersten Klammerschenkel 26, welche zwischen den beiden Rillen 35a und 35b angeordnet ist. Beim Einschieben des ersten Klammerschenkels 26 in den Schlitz 18 kommt es - wie beim ersten Ausführungsbeispiel - zu einem federelastischen Ausweichen des ersten Klammerschenkels 26 mit den beiden Anschlägen 33a und 33b in den jeweiligen Ausweichraum 36a und 36b, vgl. Figuren 25 bis 28, wenn beim Einschieben der Klammer 25 in den Schlitz 18 die Anschläge 33a, 33b über die Vorsprünge 31a und 31b gleiten. Der erste Klammerschenkel 26 wird dabei von den Vorsprüngen 31a und 31b und der Führungsflächen 19a im Bereich der Anschläge 33a, 33b um eine gerade Linie gebogen, welche entlang der Längsrichtung des ersten Klammerschenkels 26 in Richtung gingival-okklusal verläuft, vgl. Figuren 26 und 28. Auch hier geht die Biegung des ersten Klammerschenkels 25 wieder zurück, wenn die Anschläge 33a, 33b über die Vorsprünge 31a und 31b hinweggeschoben wurden, vgl. Figuren 16 bis 18. Beim Verschieben der Klammer 25 zwischen der Offenstellung, vgl. Figur 17, und der Schließstellung, vgl. Figur 21, ragen die Vorsprünge 31a, 31b in die Aussparungen 30a, 30b hinein und behindern das Verschieben nicht. Zum Verschieben der Klammer 25 von der Schließstellung in die Offenstellung hat der zweite Klammerschenkel 27 ein Loch 40, in welches mit einem stiftförmigen Werkzeug (nicht dargestellt) eingegriffen werden kann. Im Übrigen entspricht die Funktionsweise des zweiten Ausführungsbeispiels derjenigen des ersten Ausführungsbeispiels, sodass zur Vermeidung von Wiederholungen darauf verwiesen wird.

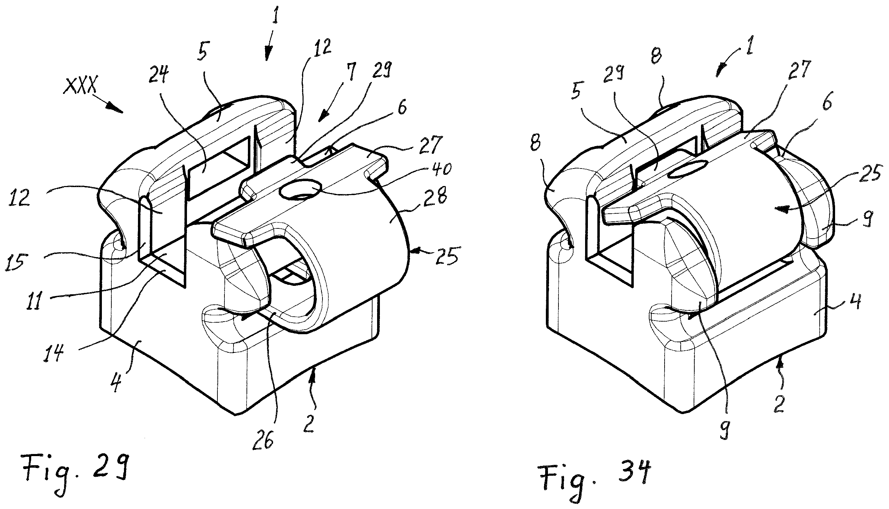

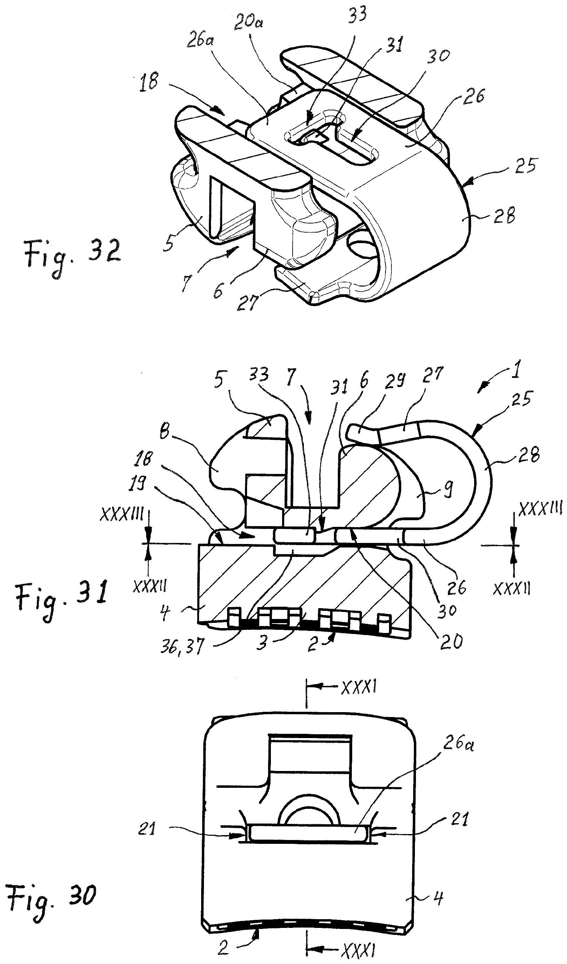

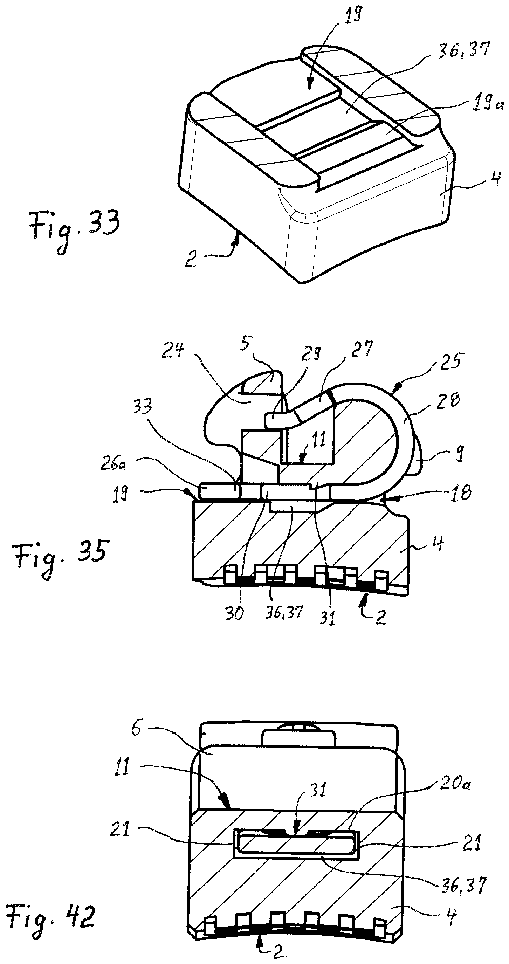

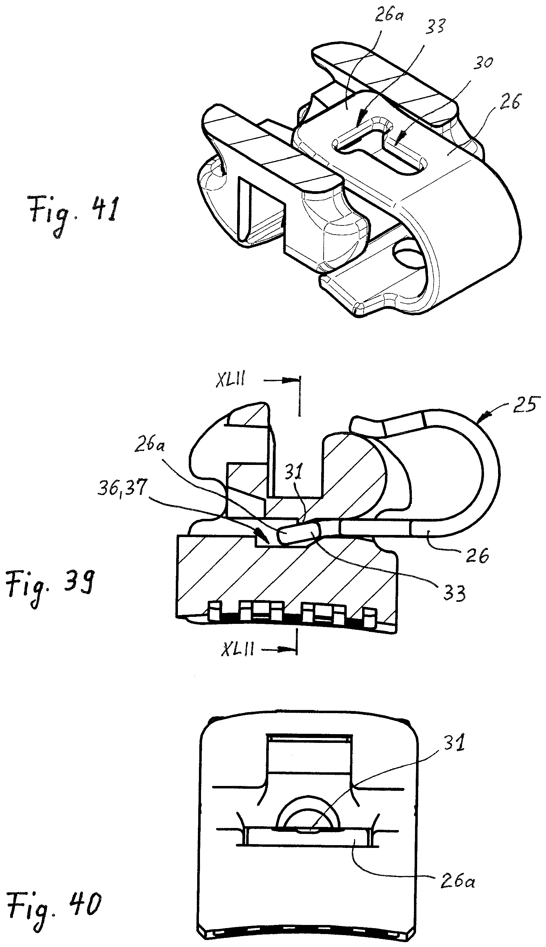

Bei dem in den Figuren 29 bis 42 dargestellten dritten Ausführungsbeispiel des erfindungsgemäßen Brackets 1 weist der erste Klammerschenkel 26 eine längliche Aussparung 30 auf, die T-förmig ausgestaltet ist. In diese ragt ein von der labial gelegenen Oberfläche 20 ausgehender Vorsprung 31 nach lingual hinein. Die labial gelegene Oberfläche 20 ist als ebene Führungsfläche 20a ausgebildet. Die lingual gelegene Oberfläche 19 enthält eine ebene Führungsfläche 19a. In der lingual gelegenen Oberfläche 19 ist eine Tasche 37 als Ausweichraum 36 ausgeformt. Die Tasche 37 erstreckt sich über die gesamte Breite des Schlitzes 18, vgl. Figur 33. Beim Einschieben des ersten Klammerschenkels 26 in den Schlitz 18 kommt es - wie beim ersten Ausführungsbeispiel - zu einem federelastischem Ausweichen des ersten Klammerschenkels 26 mit dem Anschlag 33 in den Ausweichraum 36, vgl. Figuren 39 bis 42, wenn beim Einschieben der Klammer 25 in den Schlitz 18 der Anschlag 30 über den Vorsprung 31 gleitet. Der erste Klammerschenkel wird dabei von dem Vorsprung 31 im Bereich des Anschlags 33 um eine gerade Linie gebogen, welche quer zur Längsrichtung des ersten Klammerschenkels 26, also in Richtung mesial-distal, verläuft. Wie beim ersten Ausführungsbeispiel geht die Biegung des ersten Klammerschenkels wieder zurück, wenn der Anschlag 33 über den Vorsprung 31 hinweggeschoben wurde, vergleiche Figuren 30 bis 32. Im Übrigen entspricht die Funktionsweise des dritten Ausführungsbeispiels derjenigen des ersten Ausführungsbeispiels, sodass zur Vermeidung von Wiederholungen darauf verwiesen wird.

### Bezugszeichenliste

| | | | |
|---|---|---|---|
| 1 | Bracket | 31b | Vorsprung |
| 2 | Befestigungsseite | 33 | Anschlag |
| 3 | Vorsprünge | 33a | Anschlag |
| 4 | Sockel | 33b | Anschlag |
| 5 | gingivale Wand | 35 | Rille |
| 6 | okklusale Wand | 35a | Rille |
| 7 | Nut | 35b | Rille |
| 8 | gingivale Ligaturenflügel | 36 | Ausweichraum |
| 9 | okklusale Ligaturenflügel | 37 | Tasche |
| 11 | Grund von 7 | 40 | Loch in 27 |
| 12 | Rippen an 5 | 41 | Rille (Positionierhilfe) |
| 14 | Schrägflächen an 11 | 42 | Anschlag |
| 15 | Schrägflächen an 5 | | |
| 18 | Schlitz | | |
| 19 | lingual gelegene Oberfläche | | |
| 19a | Führungsfläche | | |
| 19b | Führungsfläche | | |
| 20 | labial gelegene Oberfläche | | |
| 20a | Führungsfläche | | |
| 21 | Seitenwände | | |
| 24 | Ausschnitt | | |
| 25 | Klammer | | |
| 26 | erster Klammerschenkel | | |
| 26a | freies Ende | | |
| 27 | zweiter Klammerschenkel | | |
| 28 | Klammerbiegung | | |
| 29 | Fortsatz von 27 | | |
| 30 | Aussparung | | |
| 30a | Aussparung | | |
| 30b | Aussparung | | |
| 31 | Vorsprung | | |
| 31a | Vorsprung | | |

## Patentansprüche

1. Selbstligierendes Bracket (1) für die Orthodontie, enthaltend
einen Sockel (4),
eine von dem Sockel (4) ausgehende okklusale Wand (6),
eine von dem Sockel (4) ausgehende gingivale Wand (5),
eine Nut (7), welche die okklusale Wand (6) und die gingivale Wand (5) voneinander trennt und sich durchgehend in Richtung von mesial nach distal erstreckt,
eine der Nut (7) abgewandte Befestigungsseite (2) zum Aufkleben des Brackets (1) auf eine linguale oder vestibuläre Oberfläche eines Zahnes,
einen Schlitz (18), welcher sich in Richtung von gingival nach okklusal erstreckt und durch eine lingual gelegene Oberfläche (19) und durch eine labial gelegene Oberfläche (20) begrenzt ist,
und eine federnde Klammer (25), welche einen ersten Klammerschenkel (26) und einen zweiten Klammerschenkel (27) hat, welche durch eine okklusal oder gingival angeordnete Klammerbiegung (28) miteinander verbunden sind,
wobei der erste Klammerschenkel (26) zwischen der lingual gelegenen Oberfläche (19) und der labial gelegenen Oberfläche (20) in dem Schlitz (18) steckt und darin in Richtung gingival-okklusal zwischen einer Schließstellung und einer Offenstellung der Klammer (25) verschiebbar ist,
und wobei der erste Klammerschenkel (26) eingerichtet ist, einen ungewollten Verlust der Klammer (25) zu verhindern,
wobei der erste Klammerschenkel (26) wenigstens eine zentrale, längliche Aussparung (30; 30a; 30b) aufweist, in welche ein von der lingual oder der labial gelegenen Oberfläche (20) des Schlitzes ausgehender Vorsprung (31; 31a; 31b) hineinragt,
die Aussparung (30; 30a; 30b) an ihrem der Klammerbiegung (28) abgewandten Ende von einem Anschlag (33; 33a; 33b) begrenzt wird, welcher in Offenstellung der Klammer (25) an dem Vorsprung (31; 31a; 31b) anschlägt und eine weitere Verschiebung der Klammer (25) begrenzt, und
die dem Vorsprung (31; 31a; 31b) gegenüber gelegene Oberfläche (19) innerhalb des Schlitzes (18) einen Ausweichraum (36) ausformt, in welchen hinein der erste Klammerschenkel (26) mit dem Anschlag (33; 33a; 33b) unter federelastischer Verformung ausweicht, wenn beim Einschieben der Klammer (25) in den Schlitz (18) der Anschlag (33; 33a; 33b) über den Vorsprung (31; 31a; 31b) gleitet,
wobei die den Schlitz (18) begrenzende Oberfläche (20), von welcher der Vorsprung (31; 31a; 31b) ausgeht, eine ebene Führungsfläche (20a) für den ersten Klammerschenkel (26) enthält, und
die zur Klammerbiegung (28) weisende Seite des Vorsprungs (31; 31a; 31b) schräg zu der Führungsfläche (20a) verläuft, **dadurch gekennzeichnet, dass**
der Ausweichraum (36) durch eine Rille (35, 35a, 35b) in der dem Vorsprung (31) gegenüber gelegenen Oberfläche (19) des Schlitzes (18) gebildet wird, wobei sich die Rille (35, 35a, 35b) von gingival nach okklusal erstreckt.

2. Bracket nach Anspruch 1, bei welchem die dem Vorsprung (31; 31a; 31b) gegenüber gelegene Oberfläche (19) des Schlitzes (18) wenigstens eine ebene Führungsfläche (19a; 19b) für den ersten Klammerschenkel (26) enthält.

3. Bracket nach einem der vorstehenden Ansprüche, in welchem die zur Klammerbiegung (28) weisende Seite des Vorsprungs (31; 31a; 31b) in einem Winkel von 15° bis 25°zu der Führungsfläche (20a) verläuft.

4. Bracket nach einem der vorstehenden Ansprüche, in welchem der erste Klammerschenkel (26) sich in einer Ebene erstreckt und um eine entlang dieser Ebene verlaufende Linie gebogen wird, wenn er beim Einschieben der Klammer (25) in den Schlitz (18) unter federelastischer Verformung dem Vorsprung (31; 31a; 31b) ausweicht.

5. Bracket nach einem der Ansprüche 1 bis 4, in welchem die zentrale Aussparung (30; 30a; 30b), ein Langloch ist.

6. Bracket nach Anspruch 5, bei welchem der Ausweichraum (36) durch eine Rille (35) in der dem Vorsprung (31) gegenüber gelegenen Oberfläche (19) des Schlitzes (18) gebildet wird, wobei sich die Rille (35) über die gesamte Länge des Schlitzes (18) von gingival nach okklusal erstreckt.

7. Bracket nach den Ansprüchen 2 und 6, bei welchem die Rille (35) zwischen zwei ebenen Führungsflächen (19a, 19b) für den ersten Klammerschenkel (26) angeordnet ist.

8. Bracket nach einem der Ansprüche 1 bis 4, in welchem der erste Klammerschenkel (26) an seinem mesialen Rand und an seinem distalen Rand jeweils eine Aussparung (30a; 30b) aufweist, wobei in jede der Aussparungen (30a; 30b) ein von der lingual oder der labial gelegenen Oberfläche (20) des Schlitzes (18) ausgehender Vorsprung (31a; 31b) hineinragt, wobei jede Aussparung (30a; 30b) an ihrem der Klammerbiegung (28) abgewandten Ende von einem Anschlag (33a; 33b) begrenzt wird, und wobei die dem Vorsprung (31a; 31b) gegenüber gelegene Oberfläche (19) des Schlitzes (18) für jeden der Anschläge (33a; 33b) jeweils einen Ausweichraum (36) bildet, in welchen hinein der erste Klammerschenkel (26) mit dem jeweiligen Anschlag (33a; 33b) unter federelastischer Verformung ausweicht, wenn beim Einschieben der Klammer (25) in den Schlitz (18) die Anschläge (33a, 33b) über die Vorsprünge (31a, 31b) gleiten.

9. Bracket nach Anspruch 8, bei welchem jeder Ausweichraum (36) durch jeweils eine Rille (35a; 35b) in der den Vorsprüngen (31a, 31b) gegenüber gelegenen Oberfläche (19) des Schlitzes (18) gebildet wird, wobei sich die Rille (35a; 35b) jeweils von gingival nach okklusal erstreckt, insbesondere über die gesamte Länge des Schlitzes (18).

10. Bracket nach den Ansprüchen 2 und 9, bei welchem der Ausweichraum (36) durch die Rille (35a) und eine weitere Rille (35b) in der dem Vorsprung (31) gegenüber gelegenen Oberfläche (19) des Schlitzes (18) gebildet wird, wobei sich auch die weitere Rille (35) von gingival nach okklusal erstreckt und die ebene Führungsfläche (19a) für den ersten Klammerschenkel (26) zwischen den beiden Rillen (35a; 35b) angeordnet ist.

11. Bracket nach einem der vorstehenden Ansprüche, bei welchem der Schlitz (18) sich durchgehend durch den Sockel (4) hindurch erstreckt.

12. Bracket nach Anspruch 11, bei welchem in jeder Stellung der Klammer (25) die den Schlitz (18) begrenzende Oberfläche (19), welche auf der der Nut (7) abgewandten Seite des ersten Klammerschenkels (26) gelegen ist, über das freie Ende (26a) des ersten Klammerschenkels (26) vorsteht, und bei welchem an und/oder vor dem freien Ende (26a) des ersten Klammerschenkels (26) eine Positionierhilfe (41) für ein Werkzeug vorgesehen ist, mit welchem die Klammer (25) durch Druck gegen das freie Ende (26a) ihres ersten Klammerschenkels (26) von der Schließstellung in die Offenstellung verschoben werden kann.

13. Bracket nach Anspruch 12, bei welchem als Positionierhilfe in dem Sockel (4) eine sich von gingival nach okklusal erstreckende Rille (41) vorgesehen ist, welche an einem Anschlag (42) endet, welcher von dem freien Ende (26a) des ersten Klammerschenkels (26) überdeckt wird, wenn sich die Klammer (25) in ihrer Schließstellung befindet.

14. Bracket nach einem der vorstehenden Ansprüche, bei welchem der zweite Klammerschenkel (27) ein Loch (40) aufweist.

## Claims

1. A self-ligating bracket (1) for orthodontics, comprising:
a socket (4),
an occlusal wall (6) that extends from the socket (4),
a gingival wall (5) that extends from the socket (4),
a groove (7), which separates the occlusal wall (6) and the gingival wall (5) from each other, and extends continuously in the mesial to distal direction,
a fastening side (2) facing away from the groove (7) for adhesively bonding the bracket (1) to a lingual or vestibular surface of a tooth,
a slit (18), which extends in the gingival to occlusal direction, and is bordered by a lingually situated surface (19) and by a labially situated surface (20),
and a resilient clamp (25), which has a first clamp leg (26) and a second clamp leg (27) that are connected with each other by an occlusally or gingivally arranged clamp bend (28),
wherein the first clamp leg (26) is inserted in the slit (18) between the lingually situated surface (19) and the labially situated surface (20), and can be moved therein in a gingival-occlusal direction between a closed position and an open position of the clamp (25),
and wherein the first clamp leg (26) is set up in such a way as to prevent an unintended loss of the clamp (25),
wherein the first clamp leg (26) has at least one oblong recess (30; 30a; 30b), into which protrudes a projection (31; 31a; 31b) that extends from the lingually or labially situated surface (20) of the slit,
the recess (30; 30a; 30b) is bordered on its end facing away from the clamp bend (28) by a stop (33; 33a; 33b), which abuts the projection (31; 31a; 31b) in the open position of the clamp (25) and limits a further movement of the clamp (25), and
the surface (19) situated opposite the projection (31; 31a; 31b) forms an escape space (36) inside of the slit (18), into which the first clamp leg (26) escapes with the stop (33; 33a; 33b) under a resilient deformation when the stop (33; 33a; 33b) slides over the projection (31; 31a; 31b) during insertion of the clamp (25) into the slit (18),
the surface (20) that borders the slit (18), and from which the projection (31; 31a; 31b) proceeds, contains a flat guiding surface (20a) for the first clamp leg (26), and
the side of the projection (31; 31a; 31b) facing the clamp bend (28) runs inclined to the guiding surface (20a), **characterized in that**
the escape space (36) is formed by a channel (35) in the surface (19) of the slit (18) situated opposite the projection (31), wherein the channel (35) extends from gingival to occlusal.

2. The bracket according to claim 1, in which the surface (19) of the slit (18) lying opposite the projection (31; 31a; 31b) contains at least one flat guiding surface (19a; 19b) for the first clamp leg (26).

3. The bracket according to any one of the preceding claims, in which the side of the projection (31; 31a; 31b) facing the clamp bend (28) runs at an angle of 15° to 25° to the guiding surface (20a).

4. The bracket according to any one of the preceding claims, in which the first clamp leg (26) extends in a plane, and is bent around a line running along this plane when it yields to the projection (31; 31a; 31b) under a resilient deformation during insertion of the clamp (25) into the slit (18).

5. The bracket according to one of claims 1 to 4, in which the central recess (30; 30a; 30b) is an oblong hole.

6. The bracket according to claim 5, in which the escape space (36) is formed by a channel (35) in the surface (19) of the slit (18) situated opposite the projection (31), wherein the channel (35) extends from gingival to occlusal over the entire length of the slit (18).

7. The bracket according to claims 2 and 6, in which the channel (35) is arranged between two flat guiding surfaces (19a, 19b) for the first clamp leg (26).

8. The bracket according to any one of claims 1 to 4, in which the first clamp leg (26) can have a respective recess (30a; 30b) on its mesial edge and on its distal edge, wherein a projection (31a; 31b) extending from the lingually or labially situated surface (20) of the slit (18) protrudes into each of the recesses (30a; 30b), wherein each recess (30a; 30b) is bordered by a stop (33a; 33b) at its end facing away from the clamp bend (28), and wherein the surface (19) of the slit (18) lying opposite the projection (31a; 31b) forms a respective escape space (36) for each of the stops (33a; 33b), into which the first clamp leg (26) with the respective stop (33a; 33b) escapes under a resilient deformation when the stops (33a; 33b) slide over the projections (31a, 31b) during insertion of the chamber (25) into the slit (18).

9. The bracket according to claim 8, in which each escape space (36) is formed by a channel (35a; 35b) in the surface (19) of the slit (18) lying opposite the projections (31a, 31b), wherein each of the channels (35a; 35b) extends from gingival to occlusal, in particular over the entire length of the slit (18).

10. The bracket according to claims 2 and 9, in which the escape space (36) is formed by a channel (35a) and a further channel (35b) in the surface (19) of the slit (18) opposite to the projection (31), wherein the further channel (35) extends from gingival to occlusal and the flat guiding surface (19a) for the first clamp leg (26) is arranged between the two channels (35a; 35b).

11. The bracket according to any one of the preceding claims, in which the slit (18) extends continuously through the socket (4).

12. The bracket according to claim 11, in which the surface (19) bordering the slit (18) lies on the side of the first clamp leg (26) facing away from the groove (7), and protrudes over the free end (26a) of the first clamp leg (26) in each position of the clamp (25), and in which a positioning aid (41) for a tool is provided at and/or before the free end (26a) of the first clamp leg (26), with which the clamp (25) can be moved from the closed position into the open position by pressing against the free end (26a) of its first clamp leg (26).

13. The bracket according to claim 12, in which a channel (41) extending from gingival to occlusal is provided in the socket (4) as the positioning aid, which ends at a stop (42) that is covered by an end (26a) of the first clamp leg (26) when the clamp (25) is in its closed position.

14. The bracket according to any one of the preceding claims, in which the second clamp leg (27) has a hole (40).

## Revendications

1. Bracket autoligaturant (1) pour l'orthodontie, comprenant
un socle (4),
une paroi occlusale (6) partant du socle (4),
une paroi gingivale (5) partant du socle (4),
une rainure (7) qui sépare la paroi occlusale (6) et la paroi gingivale (5) et qui s'étend de manière continue dans la direction mésiale-distale,
un côté de fixation (2) opposé à la rainure (7) pour le collage du bracket (1) sur une surface linguale ou vestibulaire d'une dent,
une fente (18) qui s'étend dans la direction gingivale-occlusale et qui est délimitée par une surface linguale (19) et par une surface labiale (20),
et une agrafe élastique (25) ayant une première branche d'agrafe (26) et une seconde branche d'agrafe (27) reliées par une courbure d'agrafe (28) disposée de manière occlusale ou gingivale,
la première branche d'agrafe (26) étant insérée dans la fente (18) entre la surface linguale (19) et la surface labiale (20) et pouvant coulisser dans celle-ci dans la direction gingivale-occlusale entre une position fermée et une position ouverte de l'agrafe (25),
et dans lequel la première branche d'agrafe (26) est conçue pour empêcher une perte involontaire de l'agrafe (25),
la première branche d'agrafe (26) présentant au moins un évidement central allongé (30; 30a; 30b) dans lequel s'engage une saillie (31; 31a; 31b) partant de la surface linguale ou labiale (20) de la fente,
l'évidement (30; 30a; 30b) est limité à son extrémité opposée à la courbure d'agrafe (28) par une butée (33; 33a; 33b) qui, en position ouverte de l'agrafe (25), vient en butée contre la saillie (31; 31a; 31b) et limite un déplacement supplé-mentaire de l'agrafe (25), et
la surface (19) opposée à la saillie (31; 31a; 31b) forme, à l'intérieur de la fente (18), un espace d'évitement (36) dans lequel la première branche d'agrafe (26) avec la butée (33; 33a; 33b) échappe avec une déformation élastique lorsque, lors de l'insertion de l'agrafe (25) dans la fente (18), la butée (33; 33a; 33b) glisse sur la saillie (31; 31a; 31b),
dans lequel la surface (20) délimitant la fente (18), à partir de laquelle la saillie (31; 31a; 31b) s'étend, comprend une surface de guidage plane (20a) pour la première branche d'agrafe (26), et
le côté de la saillie (31; 31a; 31b) orienté vers la courbure de l'agrafe (28) est incliné par rapport à la surface de guidage (20a), **caractérisé en ce que** l'espace d'évitement (36) est formé par une rainure (35, 35a, 35b) dans la surface (19) de la fente (18) opposée à la saillie (31), la rainure (35, 35a, 35b) s'étendant dans la direction gingivale-occlusale.

2. Bracket selon la revendication 1, dans lequel la surface (19) de la fente (18) opposée à la saillie (31; 31a; 31b) comprend au moins une surface de guidage plane (19a ; 19b) pour la première branche d'agrafe (26).

3. Bracket selon l'une quelconque des revendications précédentes, dans lequel le côté de la saillie (31; 31a; 31b) orienté vers la courbure d'agrafe (28) s'étend selon un angle de 15° à 25° par rapport à la surface de guidage (20a).

4. Bracket selon l'une quelconque des revendications précédentes, dans lequel la première branche d'agrafe (26) s'étend dans un plan et est pliée autour d'une ligne s'étendant le long dudit plan lorsqu'elle s'écarte de la saillie (31; 31a; 31b) sous l'effet d'une déformation élastique lors de l'insertion de l'agrafe (25) dans la fente (18).

5. Bracket selon l'une quelconque des revendications 1 à 4, dans lequel l'évidement central (30; 30a; 30b), est un trou oblong.

6. Bracket selon la revendication 5, dans lequel l'espace d'évitement (36) est formé par une rainure (35) dans la surface (19) de la fente (18) opposée à la saillie (31), la rainure (35) s'étendant sur toute la longueur de la fente (18) dans la direction gingivale-occlusale.

7. Bracket selon les revendications 2 et 6, dans lequel la rainure (35) est disposée entre deux surfaces de guidage planes (19a, 19b) pour la première branche d'agrafe (26).

8. Bracket selon l'une des revendications 1 à 4, dans lequel la première branche d'agrafe (26) présente sur son bord mésial et sur son bord distal respectivement un évidement (30a; 30b), dans chacun desquels (30a; 30b) s'engage une saillie (31a; 31b) partant de la surface linguale ou labiale (20) de la fente (18), chaque évidement (30a; 30b) étant délimité à son extrémité opposée à la courbure d'agrafe (28) par une butée (33a; 33b), et la surface (19) de la fente (18) opposée à la saillie (31a; 31b) formant pour chacune des butées (33a; 33b) un espace d'évitement (36) dans lequel la première branche d'agrafe (26) avec la butée respective (33a; 33b) échappe avec une déformation élastique lorsque les butées (33a, 33b) glissent sur les saillies (31a, 31b) lors de l'insertion de l'agrafe (25) dans la fente (18).

9. Bracket selon la revendication 8, dans lequel chaque espace d'évitement (36) est formé par une rainure (35a; 35b) respective dans la surface (19) de la fente (18) opposée aux saillies (31a, 31b), la rainure (35a; 35b) s'étendant respectivement dans la direction gingivale-occlusale, notamment sur toute la longueur de la fente (18).

10. Bracket selon les revendications 2 et 9, dans lequel l'espace d'évitement (36) est formé par la rainure (35a) et une autre rainure (35b) dans la surface (19) de la fente (18) opposée à la saillie (31), l'autre rainure (35) s'étendant également dans la direction gingivale-occlusale et la surface de guidage plane (19a) pour la première branche d'agrafe (26) étant disposée entre les deux rainures (35a; 35b).

11. Bracket selon l'une des revendications précédentes, dans lequel la fente (18) s'étend de manière continue à travers le socle (4).

12. Bracket selon la revendication 11, dans lequel, dans chaque position de l'agrafe (25), la surface (19) délimitant la fente (18), qui est située sur le côté de la première branche d'agrafe (26) opposé à la rainure (7), fait saillie au-delà de l'extré-mité libre (26a) de la première branche d'agrafe (26), et dans lequel il est prévu, sur et/ou devant l'extrémité libre (26a) de la première branche d'agrafe (26), une aide au positionnement (41) pour un outil, avec lequel l'agrafe (25) peut être déplacée de la position fermée à la position ouverte par pression contre l'extrémité libre (26a) de sa première branche (26).

13. Bracket selon la revendication 12, dans lequel il est prévu comme aide au position-nement dans le socle (4) une rainure (41) s'étendant dans la direction gingivale-occlusale, qui se termine par une butée (42) qui est recouverte par l'extrémité libre (26a) de la première branche d'agrafe (26) lorsque l'agrafe (25) se trouve dans sa position fermé.

14. Bracket selon l'une des revendications précédentes, dans lequel la seconde branche d'agrafe (27) présente un trou (40).
